# EUROPÄISCHE PATENTSCHRIFT

(11) **EP 1 902 293 B1**
(45) Veröffentlichungstag und Bekanntmachung des Hinweises auf die Patenterteilung: **12.05.2010**
(21) Anmeldenummer: 06764059.9
(22) Anmeldetag: 04.07.2006
(51) Int. Cl.: G01M 13/04

(54) **SCHNITTSTELLENMODULVORRICHTUNG FÜR EINE ELEKTRISCHE MASCHINE ZUR LEBENSDAUERBERECHNUNG EINES LAGERS**
INTERFACE MODULE OF AN ELECTRIC MOTOR FOR CALCULATING THE SERVICE LIFE OF A BEARING
DISPOSITIF DE MODULE D'INTERFACE DESTINE A UNE MACHINE ELECTRIQUE, CONÇU POUR CALCULER LA DUREE DE VIE D'UN PALIER

(30) Priorität: 13.07.2005 DE 102005032720
(43) Veröffentlichungstag der Anmeldung: 26.03.2008
(73) Patentinhaber: SIEMENS AKTIENGESELLSCHAFT, 80333 München (DE)
(72) Erfinder: ECKERT, Rainer, 97616 Bad Neustadt/Herschfeld (DE); FILBRY, Karl-Heinz, 97633 Höchheim (DE); HÖHN, Ulrich, 97618 Hollstadt/Junkershausen (DE); PLATEN, Markus, 97616 Bad Neustadt (DE)
(86) Internationale Anmeldenummer: PCT/EP2006/063863
(87) Internationale Veröffentlichungsnummer: WO 2007/006691

(56) Entgegenhaltungen:
- EP-A1- 1 510 805
- EP-A2- 1 055 923
- EP-A2- 1 184 813
- DE-A1- 10 049 506
- DE-A1- 10 228 389
- DE-A1- 19 937 203
- US-A- 5 621 159

## Beschreibung

Die vorliegende Erfindung betrifft eine Schnittstellenmodulvorrichtung zum Anschluss an eine elektrische Maschine, die ein Lager aufweist, und zur Ausgabe einer Restlebensdauer des Lagers. Darüber hinaus betrifft die vorliegende Erfindung eine entsprechende elektrische Maschine mit dieser Schnittstellenmodulvorrichtung.

Lagerverschleiß oder Lagerermüdungen durch Überlastung führen zum Ausfall eines entsprechenden Lagers eines Motors und damit zum Ausfall des Motors. Der Lagerverschleiß durch Nachlassen der Schmiereigenschaften des Fetts ist von der Belastungshistorie des Lagers, insbesondere von Lagertemperatur und Drehzahlen, abhängig und für einen Großteil der Lagerausfälle von Motoren verantwortlich. Die Lagerermüdung ist vor allem von der Belastung des Lagers durch Querkraft, eingeleitete Schwingungen und Drehzahlen abhängig.

Häufig werden lediglich allgemeine, rechnerisch ermittelte und durch Versuche belegte Lagerwechselfristen für Motoren empfohlen. Individueller Verschleiß bzw. Ermüdungszustände finden in der Regel keine Berücksichtigung.

Aus der Druckschrift DE 199 37 203 A1 ist eine Überwachung der Lebensdauer und der Belastung von Lagern bekannt. Dabei fühlt ein System Wälzelementbelastungen in Echtzeit in einem Wälzelementlager ab. Eine Vielzahl von Sensoren ist um eine der inneren Laufbahnen und der äußeren Laufbahnen des Lagers herum angeordnet, um Sensordaten auszugeben, die festgestellten Belastungen entsprechen. Eine Steuereinheit sagt die Lagerlebensdauer aus den Sensordaten vorher und bestimmt einen Belastungsbereich des Lagers in Echtzeit aus den Sensordaten. Die Sensordaten sind zyklisch, und Spitzen und Täler werden aus den Sensordaten extrahiert, um Wälzelementbelastungen und gemessene Lagergeschwindigkeit zu bestimmen.

Darüber hinaus zeigt die Patentschrift DE 100 39 015 C1 ein Verfahren und eine Einrichtung zum Überwachen der Drehlager von Stranggießstützrollen. Zum Bestimmen der Rest-Lebensdauer von Wälz- und Gleitlagern wird eine kontinuierliche Messung und Speicherung der mechanischen und thermischen Beanspruchungen (Lastkollektiv) an einem oder mehreren Drehlagern durchgeführt. Die digitalen Messergebnisse werden in einer Auswerte- und Speichereinheit verarbeitet und aus der Gesamtzahl aller Belastungen wird ein Verhältniswert aus dem Lastkollektiv und der Grenz-Belastbarkeit des jeweiligen Drehlagers errechnet.

Aus der Druckschrift DE 102 57 793 A1 ist ein modellbasierter Lebensdauerbeobachter bekannt. Dabei werden die Systembelastungen aus der vorhandenen Fahrzeugsensorik ermittelt und die Sensorsignale zu Belastungszeitverläufen aufbereitet. Lokale Bauteil-Beanspruchungen werden aus dem Systemmodell und den Belastungszeitverläufen ermittelt. Schließlich wird durch eine Betriebsfestigkeitsanalyse die Restlebensdauer der im Systemmodell enthaltenen Bauteile aus den akkumulierten Bauteilschädigungen berechnet.

Weiterhin zeigt das Dokument US 6 529 135 B1 einen integrierten Elektromotormonitor. Dabei werden die Betriebsbedingungen des Elektromotors überwacht und entsprechende Prognoseinformationen in einer Speichereinrichtung gespeichert. Unter anderem werden dabei die Temperatur, die Motordrehzahl und die Wicklungstemperatur überwacht.

Die Bestimmung der Restlebensdauer entsprechend den oben genannten Verfahren erfordert in der Regel eine umfangreiche Mess- und Rechenapparatur.

Aus der Druckschrift EP 1 510 805 A1 ist ein gattungsgemäßes Verfahren zur Diagnose einer Restlebensdauer eines Rollenlagers bekannt. Darüber hinaus ist auch eine entsprechende Vorrichtung mit einem Beschleunigungsmesser und einer Signalwandeleinrichtung beschrieben. Zur Vorhersage einer Restlebensdauer wird die bisherige Betriebsdauer verwendet.

Darüber hinaus beschreibt die Druckschrift EP 1 184 813 A2 ebenfalls ein Verfahren und ein Gerät zur Vorhersage der Lebensdauer eines Rollenlagers. Für die Vorhersage wird die Betriebstemperatur eines Schmiermittels gemessen. Die Viskosität des Schmiermittel bei dieser Temperatur wird zur Vorhersage herangezogen.

Die Patentschrift US 5 621 159 A offenbart ein Verfahren und ein Gerät zur Bestimmung der Lagerreibung eines Lüfters. Änderungen der Betriebsgeschwindigkeit des Lüfters werden gemessen. Die Messparameter können in einer Historie festgehalten werden.

Ferner beschreibt die Druckschrift EP 1 055 923 A2 eine Überwachungseinrichtung für Lagereigenschaften. Ein oder mehrere elektrostatische Sensoren dienen dazu, eine Lagerlast zu ermitteln. Gegebenenfalls wird darauf basierend ein Alarm ausgelöst.

Ein weiteres Verfahren zur Überwachung der Lebensdauer und der Belastung von Lagern ist aus der Druckschrift DE 199 37 203 A1 bekannt. Eine Vielzahl von Sensoren ist um eine der inneren Laufbahn und der äußerten Laufbahn des Lagers herum angeordnet, um Sensordaten auszugeben, die festgestellten Belastungen entsprechen, welche durch die Wälzelemente des Lagers verursacht sind. Beispielsweise wird die Geschwindigkeit des Lagers und die Lagertemperatur gemessen.

Schließlich ist in der Druckschrift DE 100 49 506 A1 eine integrierte Elektromotorüberwachung beschrieben. Dabei werden in einem Speichenelement allgemein Trend-, Prognose-, Diagnose- und Gefahrensituationsinformationen, die den Betriebszustand des Motors kennzeichnen, gespeichert. So werden beispielsweise die Vibrationen, die Temperatur, der magnetische Fluss und Spannungen an den Motorwicklungen gemessen. Speziell für die Temperaturerfassung werden ein Umgebungstemperatursensor, ein Innenlagertemeratursensor, ein Außenlagertemperatursensor und ein Statorwicklungstemperatursensor bereitgestellt. Aus den Sensordaten kann eine Lebensdauer des Motors ermittelt werden.

Die Aufgabe der vorliegenden Erfindung besteht somit darin, die Apparatur für die Bestimmung der Restlebensdauer eines Lagers einer elektrischen Maschine zu vereinfachen.

Erfindungsgemäß wird diese Aufgabe gelöst durch eine Schnittstellenmodulvorrichtung zum Anschluss an eine elektrische Maschine, die zumindest ein Lager aufweist, und zur Ausgabe einer Restlebensdauer des Lagers mit einer Wandlereinrichtung zur Wandlung eines Rohsignals eines Gebers in ein digitales Gebersignal, einer Zeiterfassungseinrichtung, mit der eine Betriebszeit der elektrischen Maschine ermittelbar oder aufnehmbar ist, und einer Recheneinrichtung zur Ermittlung einer Drehzahl aus dem digitalen Gebersignal, zur Ermittlung einer Drehzahlbelastung des Lagers über der Zeit und zur Ermittlung einer Restlebensdauer des Lagers aus der Drehzahlbelastung während der gesamten Betriebszeit. Darüber hinaus ist in der elektrischen Maschine auch ein Temperatursensor vorgesehen. Damit kann insbesondere dem Zustand der Schmierstoffe im Lager Rechnung getragen werden. Der Temperatursensor ist nicht direkt am Lager angebracht. Vielmehr ist er an einer Wicklung der elektrischen Maschine angeordnet, um dort die Wicklungstemperatur einer Wicklung der elektrischen Maschine zu erfassen, so dass über ein Temperaturmodell die Lagertemperatur mit Hilfe der Recheneinrichtung zur Berechnung der Restlebensdauer geschätzt werden kann.

Durch das erfindungsgemäße Schnittstellenmodul können elektrische Maschinen mit einer Einheit für die Lebensdauerberechnung der Lager nachgerüstet werden. Darüber hinaus ist es durch das Modul ohne weiteres möglich, die Restlebensdauer der Lager direkt am Motor bzw. der elektrischen Maschine abzuspeichern, so dass sie jederzeit vor Ort abgerufen werden kann.

Vorzugsweise wird die Restlebensdauer als Zahlenwert in einer an die Recheneinrichtung des Schnittstellenmoduls angeschlossenen Speichereinrichtung abgespeichert. Damit steht sie für zahlreiche Anwendungen ohne spezielle Decodierung sofort zur Verfügung.

Typischerweise ist eine elektrische Maschine, z. B. ein Elektromotor, mit mindestens einem Lager, einem Geber und der oben genannten Schnittstellenmodulvorrichtung ausgestattet. Als elektrische Maschine ist auch jede andere Maschine denkbar, die über Lager verfügt. Bei dem Lager handelt es sich vorzugsweise um ein Drehlager, aber es sind auch lineare Lager denkbar, die ebenfalls einem Verschleiß unterliegen. Der Geber in oder an der elektrischen Maschine liefert ein Signal über die Bewegung der elektrischen Maschine. Dabei kann bei Rotationsmotoren aus dem Gebersignal die Drehgeschwindigkeit und bei Linearmotoren aus dem Gebersignal die Verfahrgeschwindigkeit ermittelt werden.

Die erfindungsgemäße Schnittstellenmodulvorrichtung kann in oder an dem Anschlusskasten bzw. der Steuerung der elektrischen Maschine angebracht sein.

Vorteilhafterweise ist der Geber als optischer Geber ausgestaltet. Damit ist eine hochgenaue Drehzahlauflösung möglich.

Darüber hinaus ist es vorteilhaft, wenn die erfindungsgemäße Schnittstellenmodulvorrichtung über mindestens einen weiteren Sensor zur Erfassung einer physikalischen Größe der elektrischen Maschine verfügt, wobei ein entsprechendes Sensorsignal bereitgestellt wird, so dass die Restlebensdauer auch unter Berücksichtigung des Sensorsignals von der Recheneinrichtung berechenbar ist. Damit lässt sich die Restlebensdauer exakter schätzen.

Günstig ist es, wenn der mindestens eine Sensor zur Erfassung einer Querkraft in dem Lager dient. Zusätzlich oder alternativ kann ein Sensor zur Erfassung von Schwingungen in dem Lager vorgesehen sein. Damit können mechanische Belastungen, die einen übermäßigen Verschleiß des Lagers verursachen, besser berücksichtigt werden.

Durch die belastungsabhängige Ermittlung der Lagerrestlebensdauer können die Einflüsse von Belastungsgrößen wie Lagertemperatur und Drehzahlen auf die Lagerlebensdauer besser erfasst werden. Damit kann die jeweilige Restlebensdauer des Lagers bzw. die Lagerwechselfrist genauer spezifiziert werden. Die Wahrscheinlichkeit eines nicht-planmäßigen Lagerausfalls wird somit deutlich reduziert.

Die vorliegende Erfindung wird nun anhand der beigefügten Zeichnungen näher erläutert, in denen zeigen:
- FIG 1: einen Querschnitt durch einen erfindungsgemäßen Elektromotor mit Schnittstellenmodul zur Lebensdauer- berechnung und
- FIG 2: eine Prinzipskizze eines erfindungsgemäßen Schnitt- stellenmoduls zur Restlebensdauerberechnung.

Das nachfolgend näher geschilderte Ausführungsbeispiel stellt eine bevorzugte Ausführungsform der vorliegenden Erfindung dar.

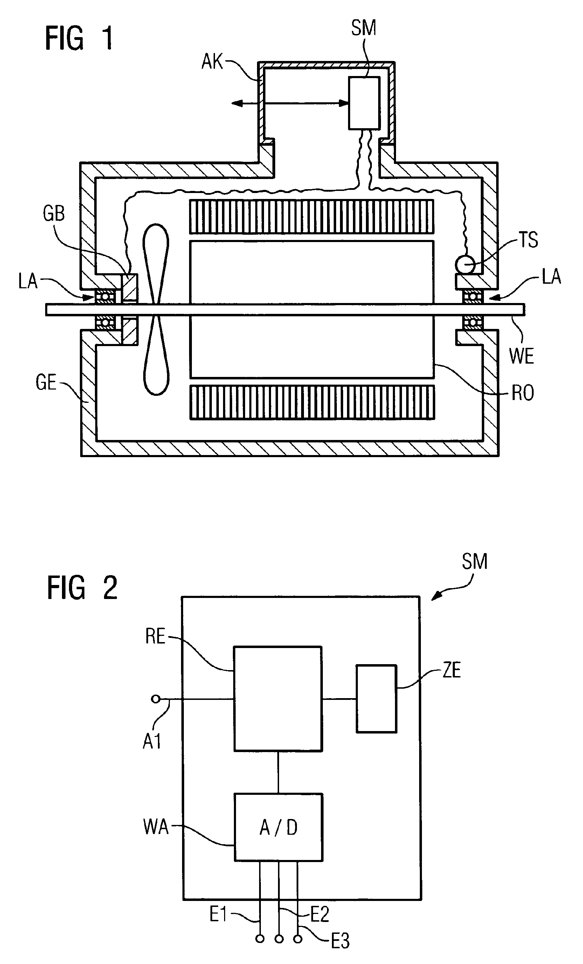

Der in FIG 1 schematisch wiedergegebene Elektromotor besitzt einen Rotor RO, der auf einer Welle WE in einem Gehäuse GE mit Hilfe von zwei Lagern LA drehbar gelagert ist. Ein Anschlusskasten AK, der an dem Gehäuse GE des Elektromotors angebracht ist, beinhaltet ein Schnittstellenmodul SM, das zur Berechnung der Restlebensdauer der Lager LA dient und mit einer Steuerung in Kommunikationsverbindung steht.

Ein Geber GB, der am Gehäuse GE des Elektromotors angeordnet ist, liefert für die Steuerung ST und das Schnittstellenmodul SM ein Drehsignal. Hieraus berechnen sich die beiden Komponenten, gegebenenfalls die Drehgeschwindigkeit des Rotors RO.

An einem der Lager LA ist ein Temperatursensor TS angebracht, um die Temperatur des Lagers zu überwachen. Sein Ausgangssignal wird an das Schnittstellenmodul SM, gegebenenfalls auch an die Steuerung ST, geliefert.

Das Schnittstellenmodul SM ist in FIG 2 vergrößert dargestellt. Es besitzt mehrere Eingänge E1, E2 und E3, mit denen Sensorsignale aufgenommen werden können. Jedes dieser analogen Sensorsignale wird von einem Wandler WA in ein digitales Signal gewandelt.

Eine Recheneinrichtung RE nimmt die digitalen Signale des Wandlers WA auf. Eine Zeiteinheit ZE liefert ein Zeitsignal für die Recheneinrichtung RE. Aus den Sensorsignalen und dem Zeitsignal errechnet die Recheneinrichtung RE eine Restlebensdauer und gibt diese am Ausgang A1 aus.

In dem Schnittstellenmodul SM werden somit die Betriebsstunden des Motors und die zugehörigen Lagertemperaturen sowie die Drehzahlen erfasst. Diese Größen lassen sich in einer in FIG 2 nicht dargestellten Speichereinrichtung zum jederzeitigen Abruf speichern. In Abhängigkeit von der Betriebsstundenzahl des Motors und der jeweiligen Belastung des Lagers LA durch Temperatur und Drehzahl wird die Restlebensdauer des Lagers bzw. der Lager LA ermittelt. Grundlage hierfür ist die für übliche Belastungen spezifizierte Lagerlebensdauer.

Die Ermittlung der Lagerrestlebensdauer kann direkt im Motor oder im Umrichter bzw. in der Steuerung erfolgen. Die Lagerrestlebensdauer kann dann beispielsweise als Zahlenwert in der Steuerung ST hinterlegt werden. Es besteht so die Möglichkeit, dass bei Überschreiten festgelegter Grenzwerte eine Warnung bzw. ein Alarm ausgegeben wird.

In dem obigen Beispiel von FIG 1 sind lediglich zwei Sensoren angedeutet. Einer zur Ermittlung der Drehzahl des Motors und einer zur Erfassung einer Lagertemperatur. Es lassen sich jedoch beliebige andere Sensoren zur Erfassung auch anderer physikalischer Größen des Motors in oder an diesem vorsehen. So können beispielsweise Querkräfte und Schwingungen durch entsprechende Sensoren detektiert und bei der Ermittlung der Lagerrestlebensdauer einbezogen werden. Zur Berechnung der Restlebensdauer können darüber hinaus auch anwendungsspezifische Minderungsfaktoren berücksichtigt werden.

Wie eingangs bereits angedeutet wurde, kann die Lagertemperatur entweder direkt über einen Temperatursensor TS oder indirekt über ein Temperaturmodell aus der Wicklungstemperatur und Belastungsgrößen des Motors ermittelt werden.

Die belastungsabhängige Ermittlung der Lagerrestlebensdauer kann gegebenenfalls mit einer üblichen Lagerüberwachung kombiniert werden. Bei dieser Lagerüberwachung wird aus den erfassten Sensorsignalen z. B. Temperatur und Schwingungen, direkt auf eine Schädigung des Lagers geschlossen. Damit kann ein Lagerausfall kurzfristig detektiert werden.

## Patentansprüche

1. Schnittstellenmodulvorrichtung (SM) zum Anschluss an eine elektrische Maschine, die ein Lager (LA) aufweist, und zur Ausgabe einer Restlebensdauer des Lagers (LA), mit
- einer Wandlereinrichtung (WA) zur Wandlung eines Rohsignals eines Gebers (GB) in ein digitales Gebersignal,
- einem Temperatursensor (TS), mit dem eine Wicklungstemperatur einer Wicklung der elektrischen Maschine erfassbar ist,
- einer Zeiterfassungseinrichtung (ZE), mit der eine Betriebszeit der elektrischen Maschine ermittelbar oder aufnehmbar ist, und
- einer Recheneinrichtung (RE) zur Ermittlung einer Drehzahl aus dem digitalen Gebersignal, zur Ermittlung einer Drehzahlbelastung des Lagers (LA) über der Zeit und zur Ermittlung einer Restlebensdauer des Lagers (LA) aus der Drehzahlbelastung während der gesamten Betriebszeit,
**dadurch gekennzeichnet, dass**
- anhand der Wicklungstemperatur über ein Temperaturmodell die Lagertemperatur mit Hilfe der Recheneinrichtung (RE) zur Berechnung der Restlebensdauer schätzbar ist.

2. Schnittstellenmodulvorrichtung nach Anspruch 1, wobei die Restlebensdauer als Zahlenwert in einer an die Recheneinrichtung (RE) angeschlossenen Speichereinrichtung abspeicherbar ist.

3. Elektrische Maschine mit zumindest einem Lager (LA), einem Geber (GB) und einer Schnittstellenmodulvorrichtung (SM) nach einem der Ansprüche 1 und 2.

4. Elektrische Maschine nach Anspruch 3, wobei der Geber (GB) ein optischer Geber ist.

5. Elektrische Maschine nach Anspruch 3 oder 4, die mindestens einen Sensor zur Erfassung einer Querkraft in dem Lager aufweist, so dass die Restlebensdauer auch unter Berücksichtigung der Querkraft von der Recheneinrichtung (RE) berechenbar ist.

6. Elektrische Maschine nach Anspruch 5, die mindestens einen Schwingungssensor aufweist, so dass die Restlebenadauer auch unter Berücksichtigung einer Schwingung von der Recheneinrichtung (RE) berechenbar ist.

## Claims

1. Interface module apparatus (SM) for connection to an electrical machine, which has a bearing (LA), and for outputting a remaining life of the bearing (LA), having
- a converter device (WA) for conversion of a raw signal from a transmitter (GB) to a digital transmitter signal,
- a temperature sensor (TS) by means of which a winding temperature of a winding in the electrical machine can be recorded,
- a time recording device (ZE) by means of which the operating time of the electrical machine can be determined or recorded, and
- a computation device (RE) for determining the rotation speed from the digital transmitter signal, for determining the rotation speed load on the bearing (LA) over time, and for determining the remaining life of the bearing (LA) from the rotation speed load throughout the entire operating time,
**characterized in that**
- the bearing temperature can be estimated on the basis of the winding temperature using a temperature model, with the aid of the computation device (RE), in order to calculate the remaining life.

2. Interface module apparatus according to Claim 1, wherein the remaining life can be stored as a numerical value in a storage device which is connected to the computation device (RE).

3. Electrical machine having at least one bearing (LA), a transmitter (GB) and an interface module apparatus (SM) according to one of Claims 1 and 2.

4. Electrical machine according to Claim 3, wherein the transmitter (GB) is an optical transmitter.

5. Electrical machine according to Claim 3 or 4, which has at least one sensor for recording a lateral force in the bearing, such that the remaining life can be calculated by the computation device (RE), also taking account of the lateral force.

6. Electrical machine according to Claim 5, which has at least one oscillation or vibration sensor, such that the remaining life can be calculated by the computation device (RE) also taking account of any oscillation or vibration.

## Revendications

1. Dispositif ( SM ) de module d'interface pour le raccordement à une machine électrique qui a un palier ( LA ), et pour l'émission d'une durée de vie restante du palier ( LA ), comprenant
- un dispositif ( WA ) convertisseur, pour la conversion d'un signal brut d'un émetteur ( GB ) en un signal numérique d'émetteur,
- un capteur ( TS ) de température par lequel on peut détecter une température d'un enroulement de la machine électrique,
- un dispositif ( ZE ) de détection du temps, par lequel on peut déterminer ou enregistrer un temps de fonctionnement de la machine électrique, et
- une unité ( RE ) de calcul pour la détermination d'une vitesse de rotation à partir du signal numérique de l'émetteur, pour la détermination d'une charge en vitesse de rotation du palier ( LA ) en fonction du temps et pour la détermination d'une durée de vie restante du palier ( LA ) à partir de la charge en vitesse de rotation pendant toute la durée de fonctionnement,
**caractérisé en ce que**
- au moyen de la température de l'enroulement, la température du palier peut être évaluée par un modèle de température à l'aide du dispositif ( RE ) de calcul pour le calcul de la durée de vie restante.

2. Dispositif de module d'interface suivant la revendication 1, dans lequel la durée de vie restante peut être mémorisée sous la forme d'un décompte dans un dispositif de mémorisation raccordé au dispositif ( RE ) de calcul.

3. Machine électrique ayant au moins un palier ( LA ), un émetteur ( GB ) et un dispositif ( SL ) de module d'interface, suivant l'une des revendications 1 ou 2.

4. Machine électrique suivant la revendication 3, dans laquelle l'émetteur ( GB ) est un émetteur optique.

5. Machine électrique suivant la revendication 3 ou 4, qui à au moins un capteur de détermination d'une force transversale dans le palier de manière à pouvoir calculer la durée de vie restante par le dispositif ( RE ) de calcul en tenant compte aussi de la force transversale.

6. Machine électrique suivant la revendication 5, qui à au moins un capteur d'oscillation de manière à pouvoir calculer la durée de vie restante par le dispositif ( RE ) de calcul en tenant compte aussi d'une oscillation.
